# EUROPEAN PATENT SPECIFICATION

(11) **EP 3 280 607 B1**
(45) Date of publication and mention of the grant of the patent: **29.11.2023**
(21) Application number: 16726206.2
(22) Date of filing: 06.04.2016
(51) Int. Cl.: H02K 1/276, H02K 7/106, H02K 7/116, H02K 21/16, H02K 1/14, H02K 11/00, H02K 11/21, H02K 7/00, B60L 3/00, B60L 3/04, B60L 7/00, B60L 7/06, B60L 15/20

(54) **GEARMOTOR**
GETRIEBEMOTOR
MOTORÉDUCTEUR

(30) Priority: 08.04.2015 IT FI20150107
(43) Date of publication of application: 14.02.2018
(73) Proprietor: KATO IMER S.p.A., 53057 San Gimignano (SI) (IT)
(72) Inventor: BERTINI, Antonio, I-53037 San Gimignano (SI) (IT); SANI, Luca, I-50053 Empoli (FI) (IT); BANDINI, Leandro, I-50052 Certaldo (FI) (IT)
(74) Representative: Mincone, Antimo
(86) International application number: PCT/IT2016/000083
(87) International publication number: WO 2016/162892

(56) References cited:
- EP-A1- 2 687 396
- WO-A1-01/86782
- WO-A2-2010/113115
- US-A1- 2012 256 472
- US-A1- 2013 075 170
- G T De Paula ET AL: "Universidade de São Paulo A comparative study of different slot configurations for PM brushless machines used for vehicle traction. A comparative study of different slot configurations for PM brushless machines used for vehicle traction", Proceedings IECON, 10 November 2013 (2013-11-10), XP055290068, Retrieved from the Internet: URL:http://www.producao.usp.br/bitstream/h andle/BDPI/49139/A comparative study of different slot configurations for PM brushless machines used for vehicle.pdf?sequence=1&isAllowed=y [retrieved on 2016-07-20]

## Description

The present invention relates to a gearmotor and, more particularly, a self-braking gearmotor.

In particular this invention is useful in vehicular applications where the gearmotor is used as a drive wheel for construction site vehicles such as skid steer or "skid loaders" or aerial platforms and, more generally, vehicles with self-braking motor units or that otherwise require a braking action in case of malfunction or power loss.

US2013075170A1 discloses wheel drive motors constituted of electric motors for driving rear wheels that are provided on a vehicle body of a dump truck. Each wheel drive motor is connected to a main power generator through a bidirectional converter and the like and driven by power supplied from the main power generator. A resistor that consumes regenerative power from each wheel drive motor is connected to the bidirectional converter. Cooling air is supplied to the resistor from a blower. Operations of a switch of the resistor and the blower are controlled by a controller. A mode selecting switch for selecting a heating mode, a blowing mode, and a heating and blowing mode is connected to the controller.

WO2010113115A2 discloses a vehicle having a motor-gear unit, a trailing wheel of the vehicle being connected the output shaft of the gear and an input shaft of the gear being connected to a motor. The gear has an outer wheel, an inner wheel and a traction means extending between the outer wheel and the inner wheel. A revolving transmitter is also provided which lifts the traction means off the outer periphery of the inner wheel and pushes it against the inner periphery of the outer wheel.

EP2687396A1 discloses motor drive device including a circuit(e.g., an inverter) with a connection configuration that is switchable among: (a) a drive operative connection configuration that allows a motor unit to be driven with power supplied from a battery unit; (b) a regenerative braking connection configuration; and (c) a short-circuit connection configuration that causes motor coils of the motor unit to short-circuit to create a braking force. The motor drive device also includes a short-circuit current controller configured to control a short-circuit current that flows when the connection configuration of the circuit is (c) the short-circuit connection configuration. The motor drive device also includes a regenerative braking and short-circuit braking switching controller that may cause switching from (b) the regenerative braking connection configuration to (c) the short-circuit connection configuration, or vice versa.

US2012256472A1 discloses a sensor equipped and in-wheel motor incorporated bearing device for a vehicle wheel, which is capable of detecting a rotating condition of a vehicle drive wheel and is effective to control an electric drive motor or an automotive vehicle, the sensor equipped and in-wheel motor incorporated bearing device includes a wheel support bearing assembly for rotatably supporting a hub of the vehicle drive wheel, an electric drive motor providing a rotation device source for the vehicle drive wheel, and a speed reducing mechanism interposed between the electric drive motor and the wheel support bearing assembly. A rotation detecting device is also provided for detecting the rotation of an output shaft of the speed reducing mechanism.

The invention is defined by the subject-matter of independent claim 1. The dependent claims are directed to advantageous embodiments.

The present invention provides the combination a brushless permanent magnet motor with high cogging effect with a planetary type or harmonic type reduction gear, with a reduction gear ratio of at least 30: 1. The system can be completed with an electronic motor control unit, a rotor position sensor, braking resistors and devices integrated with the electric adapted to automatically close the phases of the motor on a suitably low electric resistor. Such association allows the production a self braking drive unit, able to meet very high safety standards, and at the same time allows the running of the vehicle without appreciable discontinuity by the operator to whom, therefore, is assured an adequate comfort. This solution is particularly suitable when the maximum torque of the electric motor must be very high compared to the continuous torque necessary to ensure the vehicle the ability to overrun a predetermined maximum slope. This, for example, is the case of vehicles such as skid loaders, wherein the motor torque must ensure the sliding of any wheel on the ground, and then must be sufficiently high in view of the fact that the ground-wheel coefficient of friction reaches a unitary value in the case of contact between the wheel and dry asphalt. In this case, the maximum traction torque ensures a traction of the vehicle comparable to the weight of the machine. The same utility can be found in other technical applications where the maximum torque of the electric motor must necessarily be higher than the normal operating torque.

The presence of the gear reduction unit with a high reduction ratio enhances the self-braking function of the motor and minimizes the effect of the cogging torque in the normal running of the vehicle.

The reduction of the torque oscillation due to cogging can however also be obtained by making use of a motor drive unit adapted to generate a driving torque depending on the angular position of the rotor of the motor such as to balance the cogging torque. This can be achieved by providing a position sensor associated with the electric motor drive unit.

The high reduction ratio reduces the perception of the torque oscillation induced by the cogging effect and allows the use of an electric motor in which the number of magnets required in order to obtain a sufficient braking torque is optimized. Moreover, the possibility of controlling the motor using the related control circuits so as to modulate the current component that generates the torque and to obtain a reduction in the cogging torque when required is not prevented.

It is also possible to position the gearmotor in a wheel of the vehicle thereby allowing the production of machines in which one or more wheels have a drive unit therein. This is useful also to ensure system redundancy so as to increase the safety standard met by the adopted solution.

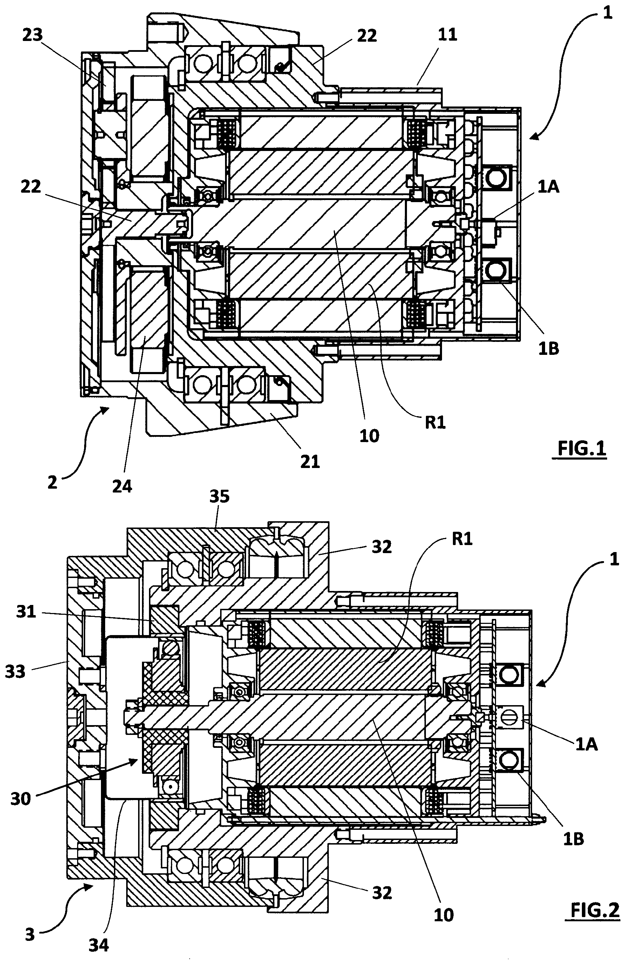

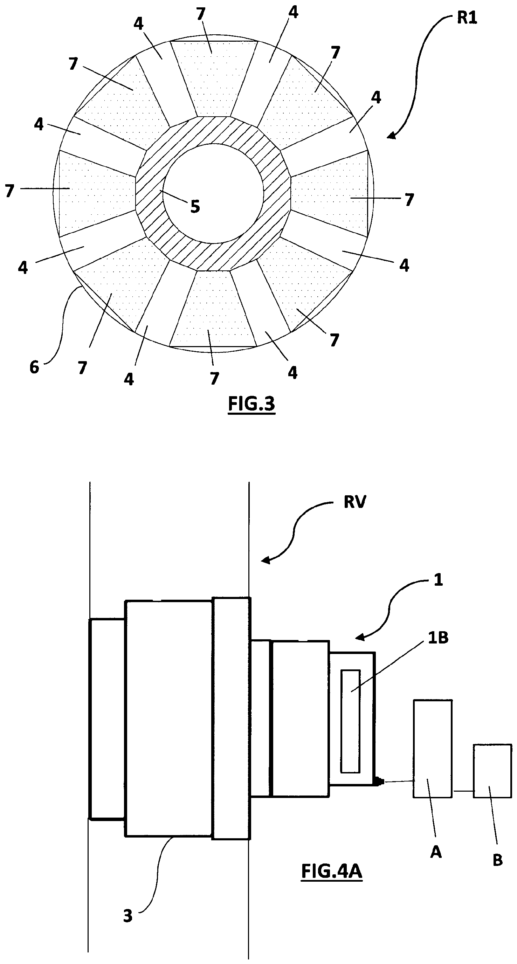

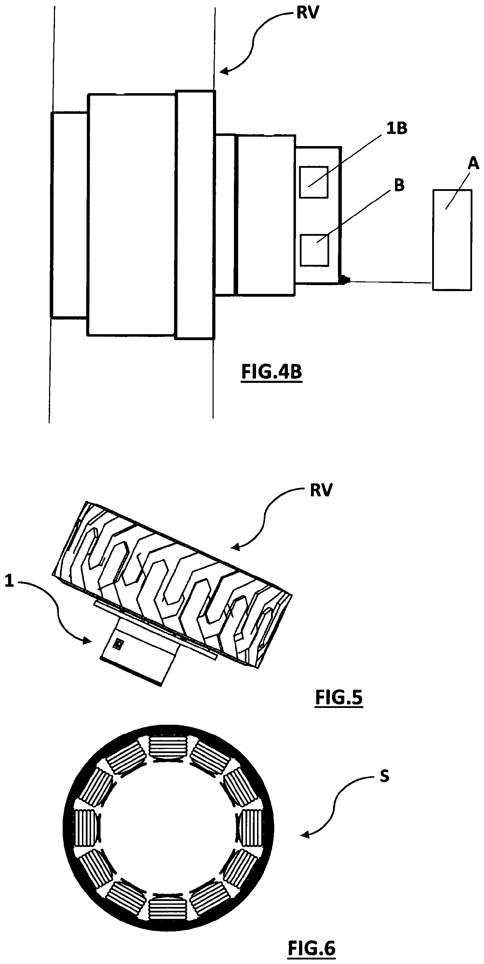

These and other advantages and characteristics of the invention will be best understood by anyone skilled in the art thanks to the following description and to the attached drawings, provided by way of example but not to be considered in a limitative sense, wherein:
▪ Fig.1 is a longitudinal section view of a self-braking gearmotor in accordance with the present invention in a possible embodiment with a planetary reduction gear unit;
▪ Fig.2 is a longitudinal section view of a self-braking gearmotor in accordance with the present invention in a possible embodiment with a harmonic reduction gear unit;
▪ Fig.3 is a schematic diametral section view of the rotor;
▪ Figs. 4A and 4B schematically show the groups of Fig.1 and Fig.2;
▪ Fig.5 shows said group applied to a wheel (RV) of a vehicle;
▪ Fig. 6 shows an embodiment of the stator (S) of the electric motor with 4 pole pairs and 12 teeth.

Figures 4A and 4B show the system composed of the gear reduction unit, the electric motor, the rotor position sensor, the electromechanical system providing the short-circuit of the phases, the motor drive unit, and the braking resistors.

The systems shown in Figure 4A and 4B differ only by the position of the braking resistors.

Reduced to its basic structure and with reference to the attached drawings figures, a self-braking gearmotor in accordance with the present invention comprises a brushless electric motor (1) with high cogging torque and a gear reduction unit (2; 3) providing a reduction ratio of at least 30: 1; a sensor (1A) for sensing the motor shaft, i.e. the rotor, position, an electromechanical device (1B) (for example, a contactor or other equivalent device) to short-circuit the phases of the motor, an electric drive unit (A) (for example, an inverter for electric motors), and braking resistors (B) that can be upstream of the drive unit (A) or integrated to the electric motor.

The gear reduction unit (2) may be either of the planetary type or of the harmonic type.

In Fig.1, the motor (1) is coupled with a planetary gear reduction unit (2).

In Fig.2 the motor (1) is coupled with a harmonic gear reduction unit (3).

The electric motor (1) is of the type having a rotor (R1) supporting with permanent magnets. From Fig.3 it can be seen that the rotor magnets (7) are preferably arranged to produce a tangential magnetization. In Fig.3 said magnets (7) have a trapezoidal cross section with the minor base facing the axis of the rotor and between them packs of plates made of magnetic steel (4) are interposed, for example M400 steel or the component (4) can be made of iron. The magnets (7) are mounted with the homonymous poles facing a non-magnetic internal support (5). On the outer side of the magnets (7) a bandage (6) can be provided. This arrangement of magnets (7) allows to reduce their number with advantages in terms of costs and also in terms of encumbrance.

The magnets (7) are preferably in plastoneodymium to reduce costs and avoid the known problems of oxidation of the permanent magnets.

The following Table 1 shows the possible values of the cogging torque as a function of the angular position of the rotor between 0 and 9 mechanical degrees with the stator windings not powered and allows to compare the values of the cogging torque for three types of magnets (BM13L, BM17 and NM35SH) and two types of magnetization (tangential magnetization and radial magnetization). The table refers to a motor whose stator (S) is configured with four pole pairs and twelve stator teeth as in the scheme of Fig.6.

**Tab.1. Cogging torque**

| | Cogging torque (Nm) | | |
|---|---|---|---|
| | Tangential Magnetization | | Radial magnetization |
| Angular position (mechanical degrees) | BM 13L | BM 17L | NM35SH |
| 0 | 2, 57 | 4,314 | 3,392 |
| 0, 5 | 3, 074 | 5, 03 | 3,565 |
| 1 | 3,59 | 5,732 | 3,906 |
| 1, 5 | 4,029 | 6,238 | 3, 911 |
| 2 | 4,271 | 6,414 | 3,594 |
| 2,5 | 4,186 | 6,202 | 3,222 |
| 3 | 3, 626 | 5,289 | 2, 494 |
| 3, 5 | 2,589 | 3, 871 | 1,661 |
| 4 | 1,358 | 2,046 | 0, 877 |
| 4,5 | 0 | 0,002 | 0,002 |
| 5 | -1,36 | -2 | -0,877 |
| 5,5 | -2,59 | -3,871 | -1,661 |
| 6 | -3, 63 | -5,289 | -2,494 |
| 6, 5 | -4, 19 | -6,202 | -3,222 |
| 7 | -4,27 | -6,414 | -3,594 |
| 7,5 | -4,03 | -6,238 | -3,911 |
| 8 | -3,59 | -5,732 | -3,906 |
| 8, 5 | -3, 07 | -5,03 | -3,565 |
| 9 | -2,57 | -4,314 | -3,392 |

The following table 2 shows the torque developed by the motor in the three previously mentioned configurations, in the same phase conditions and same angular positions of the rotor.

**Tab. 2 developed torque**

| | NM35sH | BM 13 | BM17 |
|---|---|---|---|
| Ia (Arms) | 31,8 | 31,8 | 31,8 |
| Ib (Arms) | 11,65 | 11,65 | 11,65 |
| Ic (Arms) | 43,5 | 43,5 | 43,5 |
| Developed torque (Nm) | 8,1 | 9,72 | 11,33 |
| Difference (%) | | 20 | 40 |

It is understood that the motor (1) can be structured in any suitable manner provided it is an electric motor with high cogging effect.

The inventors have found that the association of a gear reduction unit providing a reduction ratio of at least 30: 1 with an electric motor with a high cogging effect, i.e. an electric motor in which the cogging torque is at least 1/3 of the nominal torque, provides a machine in which the cogging effect produces the self-braking (braking of the wheels even without use of mechanical parking brakes acting on the vehicle in a stationary position) in safety conditions and, in the vehicle running, the operator and the machine itself are not negatively affected by the operation discontinuities that would occur in the absence of the gear reduction unit.

Where required, the vehicle can also be equipped with mechanical parking brakes.

The use of a motor with high cogging effect also offers economic advantages related, as previously said, to the constructive simplicity of the motor.

Fig.1 shows the shaft (10) of motor (1) connected with the shaft (22) of a two-stage planetary gear reduction unit (2) having a rotating crown (21) on which the wheel (RV) of the vehicle can be connected. The stator (22) is fixed on the rear flange (11) of the motor (1). The same drawing shows the satellites (23) of the first stage and the satellites (24) of the second stage of the gear reduction unit. The structure and operation of such a gear reduction unit are known per se.

In Fig.2 the shaft (10) of motor (1), suitably extended compared to the example of Fig.1, is connected with the wave generator (30) of a harmonic gear reduction unit (3), whose stator (32) is mounted on the respective circular crown (31). The same drawing shows the cover (33) integral with the flexible dome (34) and the rotor (35) on which the wheel of the vehicle (RV) will be mounted. The structure and operation of such a gear reduction unit are known per se.

As previously mentioned, the combination of a brushless electric motor with high cogging torque with a gear reduction unit providing a reduction ratio of at least 30: 1 is particularly advantageous in the manufacture of electric vehicles in which two fundamentally opposite characteristics have to be combined as the need to ensure the self-braking when the vehicle is in a stationary position and the need to ensure adequate comfort for the operator during the run.

Preferably, the reduction ratio of the gear reduction unit (2; 3) is comprised between 30: 1 and 100: 1.

It is understood that, in accordance with the present invention, a particularly high reduction ratio is preferred in relation to the particular field of application of the device described above.

In normal operation, that is, during running, the reduction of the torque variations due to the cogging effect can also be attenuated by means of a motor driving unit adapted to generate a driving torque dependent on the angular position of the rotor of the motor such as to punctually balance the cogging torque. This can be achieved in the present machine by means of the position sensor (1A) shown in Fig. 1 and the drive unit (A) of the electric motor.

The solution described above is sufficient to ensure an effective parking braking to the vehicle. To complement the system, the present invention contemplates a solution that also provides dynamic braking.

Such a solution provides to close the phases of the motor on a sufficiently low electric resistor such as to ensure good braking torque until the vehicle is still in motion.

In this phase, the motor will operate as an electric generator and the vehicle's brake torque will be proportional to the generated current. The braking resistors must then be of a value sufficiently low to ensure a braking torque even at low speeds and such as to ensure an adequate braking space. These electrical resistors must also have the ability to dissipate the kinetic energy of the vehicle. Also for this reason the system described is particularly suitable for industrial vehicles or electric vehicles operating at a low speed as in the case of operating machines where the kinetic energy is relatively low and is therefore of easy dissipation.

The braking resistors system will automatically intervene in case of failure or lack of power of the traction system. Figures 4A and 4B show two solutions.

In Figure 4A the braking resistors are those commonly provided in electrical drives. These braking resistors in the standard operation conditions limit the continuous bus voltage when the vehicle dynamic braking is desired. In this case said resistors are powered by the brushless motor through the recirculating diodes normally provided by the motor drive unit of such electric motors exhibiting static switches such as MOSFETs.

In said system it is possible to provide a further braking system 1B integrated to the motor to ensure a braking effect even at low speeds.

In fact, the threshold voltage of the diode can be, in conformity with the motor characteristics, sufficiently high to prevent the cogging torque to finally stop the vehicle.

The braking system (1B) operates automatically in case of voltage failure; the same will be disabled when the motor drive unit works properly. Therefore the motor has a sufficiently low resistance phase to ensure, once the phases are short-circuited, a braking torque helpful to ensure adequate safety levels.

From the description provided above, it is understood that the association of the gear reduction unit (2; 3) with the motor (1) with high cogging effect does not prevent the adoption of known circuit configurations for the very operation of the motor (1) or also for the dynamic braking. The drive unit and the dynamic brake system can be freely chosen or configured according to specific use requirements of the machine without losing the advantages related to the association of the gear reduction unit (2; 3) providing a high reduction ratio with the motor (1) providing a high cogging effect. In practice the details of execution may vary in any equivalent way for what concerns the individual elements described and illustrated and their mutual arrangement, without thereby departing from the scope of the adopted solution as defined in the appended claims.

## Claims

1. Gearmotor of a vehicle (RV), , comprising a brushless electric motor (1) having a predetermined nominal torque and coupled with a gear reduction unit (2; 3) adapted to be connected with a wheel of a vehicle (RV), wherein the electric motor (1) is a brushless self-braking electric motor having a predetermined cogging torque **characterised in that**
- the cogging torque is at least one-third (1/3) of the nominal torque and the gear reduction unit (2; 3) has a reduction ratio of at least 30:1 such that the self-braking is determined by the cogging effect of said brushless motor (1) and the cogging effect produces the braking of the wheel of the vehicle (RV) even without use of mechanical parking brakes acting on the vehicle (RV) in a stationary position; and
- the gear reduction unit (2; 3) is of planetary type (2) or harmonic type (3).

2. . Gearmotor of a vehicle (RV) according to claim 1 **characterized in that** the electric motor (1) has a cogging torque that periodically varies between 4.314 Nm and - 4.314 Nm.

3. . Gearmotor of a vehicle (RV) according to claim 1 **characterized in that** the electric motor (1) has a rotor (RI) with associated permanent magnets (7).

4. . Gearmotor of a vehicle (RV) according to anyone of the previous claims **characterized in that** the electric motor (1) is connected with: a sensor adapted to sense the angular position of its shaft (1A), adrive unit, a device (1B) adapted to short circuit its phases, and braking resistors (B).

5. . Gearmotor of a vehicle (RV) according to claim 4 **characterized in that** the braking resistor; (B) and the short circuit device (1B) are inside the electric motor (1)

6. . Gearmotor of a vehicle (RV) according to claims 1 and 3 **characterized in that** the rotor (RI) comprises a plurality of rotor magnets (7) adapted to produce a tangential magnetization, said magnets (7) having a trapezoidal cross section with the minor base facing the rotor axis.

7. . Gearmotor of a vehicle (RV) according to claim 6 **characterized in that** the magnets (7) are made of plastoneodymium.

## Patentansprüche

1. Getriebemotor eines Fahrzeugs (RV), umfassend einen bürstenlosen Elektromotor (1) mit einem vorbestimmten Nennmoment und gekoppelt mit einer Untersetzungseinheit (2; 3), die ausgelegt ist, mit einem Rad eines Fahrzeugs (RV) verbunden zu sein, wobei der Elektromotor (1) ein bürstenloser selbstbremsender Elektromotor mit einem vorbestimmten Rastmoment ist, **dadurch gekennzeichnet, dass**
- das Rastmoment zumindest ein Drittel (1/3) des Nennmoments ist und die Untersetzungseinheit (2; 3) ein Untersetzungsverhältnis von zumindest 30:1 aufweist, sodass die Selbstbremsung durch das Rastmoment des bürstenlosen Motors (1) bestimmt wird und das Rastmoment das Bremsen des Rads des Fahrzeugs (RV) auch ohne Verwendung von mechanischen Feststellbremsen produziert, die auf das Fahrzeug (RV) in einer stationären Position wirken; und
- die Untersetzungseinheit (2; 3) vom Planetentyp (2) oder harmonischen Typ (3) ist.

2. Getriebemotor eines Fahrzeugs (RV) nach Anspruch 1, **dadurch gekennzeichnet, dass** der Elektromotor (1) ein Rastmoment aufweist, das periodisch zwischen 4,314 Nm und -4,314 Nm variiert.

3. Getriebemotor eines Fahrzeugs (RV) nach Anspruch 1, **dadurch gekennzeichnet, dass** der Elektromotor (1) einen Rotor (RI) mit zugehörigen Permanentmagneten (7) aufweist.

4. Getriebemotor eines Fahrzeugs (RV) nach einem der vorhergehenden Ansprüche, **dadurch gekennzeichnet, dass** der Elektromotor (1) verbunden ist mit: einem Sensor, der ausgelegt ist, die Winkelposition seiner Welle (1A) zu erfassen, einer Antriebseinheit, einer Vorrichtung (1B), die ausgelegt ist, ihre Phasen kurzzuschließen, und Bremswiderständen (B).

5. Getriebemotor eines Fahrzeugs (RV) nach Anspruch 4, **dadurch gekennzeichnet, dass** die Bremswiderstände (B) und die Kurzschlussvorrichtung (1B) innerhalb des Elektromotors (1) sind.

6. Getriebemotor eines Fahrzeugs (RV) nach Anspruch 1 und 3, **dadurch gekennzeichnet, dass** der Rotor (RI) eine Vielzahl von Rotormagneten (7) umfasst, die ausgelegt ist, eine tangentiale Magnetisierung zu produzieren, wobei die Magnete (7) einen trapezförmigen Querschnitt aufweisen, wobei die Nebenfläche der Rotorachse zugewandt ist.

7. Getriebemotor eines Fahrzeugs (RV) nach Anspruch 6, **dadurch gekennzeichnet, dass** die Magnete (7) aus Plastoneodym bestehen.

## Revendications

1. Motoréducteur d'un véhicule (RV), comprenant un moteur électrique sans balais (1) ayant un couple nominal prédéterminé et couplé à une unité de réduction de vitesse (2 ; 3) adaptée pour être raccordée à une roue d'un véhicule (RV), dans lequel le moteur électrique (1) est un moteur électrique à auto-freinage sans balais ayant un couple de crantage prédéterminé **caractérisé en ce que**
- le couple de crantage est d'au moins un tiers (1/3) du couple nominal et l'unité de réduction de vitesse (2 ; 3) présente un rapport de réduction d'au moins 30:1 de telle sorte que l'auto-freinage soit déterminé par l'effet de crantage dudit moteur sans balais (1) et que l'effet de crantage produise le freinage de la roue du véhicule (RV) sans utiliser des freins de stationnement mécaniques agissant sur le véhicule (RV) dans une position stationnaire ; et
- l'unité de réduction de vitesse (2 ; 3) est de type planétaire (2) ou de type harmonique (3).

2. Motoréducteur d'un véhicule (RV) selon la revendication 1, **caractérisé en ce que** le moteur électrique (1) présente un couple de crantage qui varie périodiquement entre 4,314 Nm et - 4,314 Nm.

3. Motoréducteur d'un véhicule (RV) selon la revendication 1, **caractérisé en ce que** le moteur électrique (1) comporte un rotor (RI) avec des aimants permanents (7) associés.

4. Motoréducteur d'un véhicule (RV) selon l'une quelconque des revendications précédentes, **caractérisé en ce que** le moteur électrique (1) est connecté à : un capteur adapté pour détecter la position angulaire de son arbre (1A), une unité d'entraînement, un dispositif (1B) adapté pour court-circuiter ses phases, et des résistances de freinage (B).

5. Motoréducteur d'un véhicule (RV) selon la revendication 4, **caractérisé en ce que** les résistances de freinage (B) et le dispositif de court-circuit (1B) sont à l'intérieur du moteur électrique (1).

6. Motoréducteur d'un véhicule (RV) selon les revendications 1 et 3, **caractérisé en ce que** le rotor (RI) comprend une pluralité d'aimants de rotor (7) adaptés pour produire une aimantation tangentielle, lesdits aimants (7) ayant une section transversale trapézoïdale avec la petite base tournée vers l'axe du rotor.

7. Motoréducteur d'un véhicule (RV) selon la revendication 6, **caractérisé en ce que** les aimants (7) sont fabriqués en plastonéodyme.
